# EUROPEAN PATENT APPLICATION

(11) **EP 0 783 915 A1**
(43) Date of publication of application: **16.07.1997**
(21) Application number: 96309580.7
(22) Date of filing: 31.12.1996
(51) Int. Cl.: B01D 53/04, B01D 53/66, B01D 46/10

(54) **Filter having integral frame**

(30) Priority: 11.01.1996 US 584790
(71) Applicant: XEROX CORPORATION, Rochester New York 14644 (US)
(72) Inventor: Burnett, Daniel H., Fairport, New York 14450 (US)
(74) Representative: Reynolds, Julian David

(57) **Abstract**

A filter mechanism for an electrical apparatus such as an electrophotographic copying machine. The filter mechanism is constructed of a piece of filter medium in which the peripheral edge is heated and compressed to form a rigid spine. Further spines could be created by compressing diagonal or other shape sections across the filter medium to provide added rigidity. The filter is then structurally stable enough to then be inserted into machine duct work without the necessity for an additional cardboard or injection molded frame as is currently utilized. A second embodiment of manufacture does not entail hot welding a large piece of filter medium to individual frame sections and then cutting the individual filters after attachment of the filter medium to the frame.

## Description

This invention relates generally to an air filter, and more particularly concerns an integral filter and frame which is inexpensive and easy to manufacture. The filter may be employed, for example, in an electrophotographic printing machine.

In a typical electrophotographic printing process, a photoconductive member is charged to a substantially uniform potential so as to sensitize the surface thereof. The charged portion of the photoconductive member is exposed to a light image to selectively dissipate the charges thereon in the irradiated areas. This records an electrostatic latent image on the photoconductive member corresponding to the informational areas contained within the original document. After the electrostatic latent image is recorded on the photoconductive member, the latent image is developed by bringing a developer material into contact therewith. Generally, the developer material comprises toner particles adhering electrostatically to carrier granules. The toner particles are attracted from the carrier granules to the latent image forming a toner powder image on the photoconductive member. The toner powder image is then transferred from the photoconductive member to a copy sheet by "tack" transfer: i.e., the copy sheet is attached to the photoreceptor with a sufficiently high force to overcome external forces that might otherwise tend to cause slip. The toner particles are heated to permanently affix the powder image to the copy sheet.

The foregoing generally describes a typical black and white electrophotographic printing machine. During the printing process, there are various contaminants and noxious gases given off and emitted in the electrophotographic process. Corona generating devices for charging and transfer purposes create ozone and other noxious gases. Also, powder toner materials and paper dust and paper debris are released throughout the machine. In order to maintain the proper temperatures within the machine, here are often cooling fans and ductwork to circulate air through the machine. To prevent the dirt particles and noxious gases and fumes from being discharged into a work area, machines are often equipped with filters to filter the discharge air before it is emitted into a work environment.

The filter elements are usually a non woven polyester type or foam material supported by a cardboard or plastic frame for rigidity. Unfortunately, the frame material often costs more than the filter material. It is desirable to have a filter mechanism which will be very easy to change and be relatively inexpensive. It is further advantageous to have a filter mechanism that is simple and quick to replace with little chance of error.

US-A-3,410,060 discloses an improved filter box and disposable filter bag assembly for vacuum collection of dust particles and other contaminants in a xerographic printing machine.

US-A-4,680,040 describes a multi-purpose filtering material for use in an electrostatographic printing machine having a foraminous support matrix having a plurality of interconnecting voids to permit low impedance to flow of gaseous material but sufficient to trap particulate material and trained in the gaseous material. The filter may be placed in an electrostatographic printing apparatus at the inlet or outlet of an air stream passing therethrough to neutralize nitrogen oxide species in ozone generated by corona generating devices.

*Xerox Disclosure Journal* Volume 6, Number 5, page 217, discloses a filtering device for use in copying machines which utilizes an ozone removal material such as Hopcalite impregnated foam or an activated carbon fibrous material in combination with a particulate filter which may be any of known foraminous filtering materials such as paper or felt. The filters are used in combination to remove contaminants from air being circulated through a printing machine.

In accordance with one aspect of the present invention, there is provided an air filter for an electrical apparatus. The filter comprises a frame and a supply of filter material wherein said frame is integrally formed from said filter material to form a unitary member.

Pursuant to another aspect of the present invention there is provided a method of making a filter for an electrical apparatus, comprising forming a framework integral to a filter by compressing a portion of filter material into a rigid structural member.

Pursuant to yet another aspect of the present invention there is provided a method of making a filter for an electrical apparatus, comprising attaching a quantity of filter media sufficient to form a plurality of filters to a plurality of frame members and separating the individual filters from each other after attachment.

In each case, the electrical apparatus may for example comprise an electrophotographic printing machine.

Other features of the present invention will become apparent as the following description proceeds and upon reference to the drawings, showing exemplary embodiments and in which:
Figure 1 is a schematic elevational view depicting an illustrative electrophotographic printing machine incorporating a filter according to embodiments of the present invention;
Figure 2 is a side view of a prior art filter mechanism;
Figure 3 is a sectional end view of the Figure 2 filtering device;
Figure 4 is a side view of a first embodiment of the integrated filter and frame of the present invention;
Figure 5 is a sectional end view of the Figure 4 filtering device;
Figure 6 is an side view of a second embodiment of the integrated filter and frame of the present invention;
Figure 7 is an side view of a third embodiment of the integrated filter and frame of the present invention;
Figure 8 is an side view of a fourth embodiment of the integrated filter and frame of the present invention; and
Figure 9 is sectional end view of the Figure 8 filtering device.

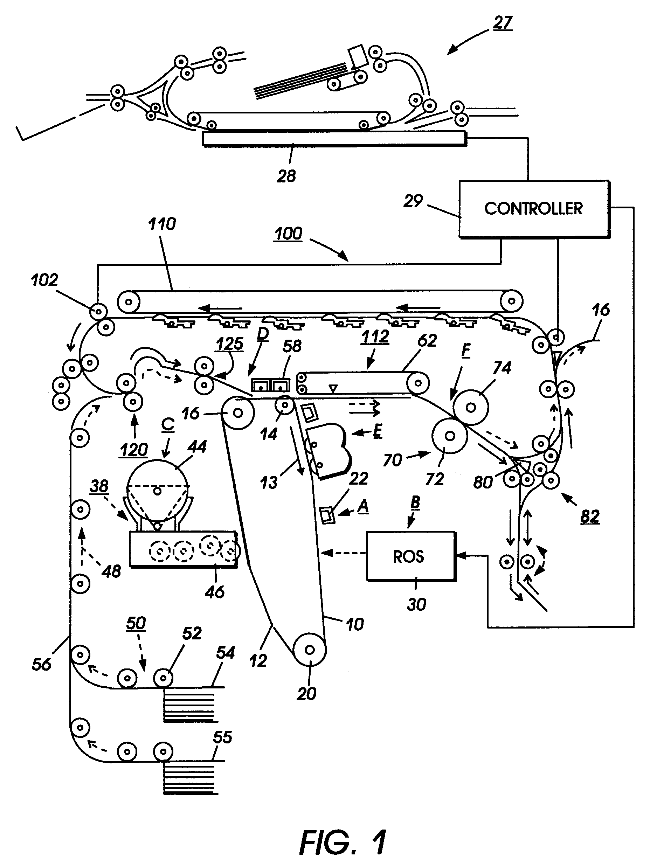

Figure 1 schematically depicts an electrophotographic printing machine incorporating therein a filter according to embodiments of the present invention. It will become evident from the following discussion that the filter apparatus of the present invention may be employed in a wide variety of devices, such as electrical devices, and is not specifically limited in its application to the particular embodiment depicted herein. The filter may be employed in any form of machine in which there are produced, during operation, contaminants and noxious gases given off in a process carried out by the machine, such as ozone and other noxious gases, powder, toner materials, dust such as paper dust and paper debris, or any other form of particulate matter.

The construction of the electrophotographic printing machine of Fig. 1 is well known to persons skilled in the art, and a detailed description therefof has been omitted from the present disclosure, for conciseness. For a detailed description of the machine of Fig. 1, reference is made to U.S. patent application serial no. 08/584,790, a copy of which was filed with the present application.

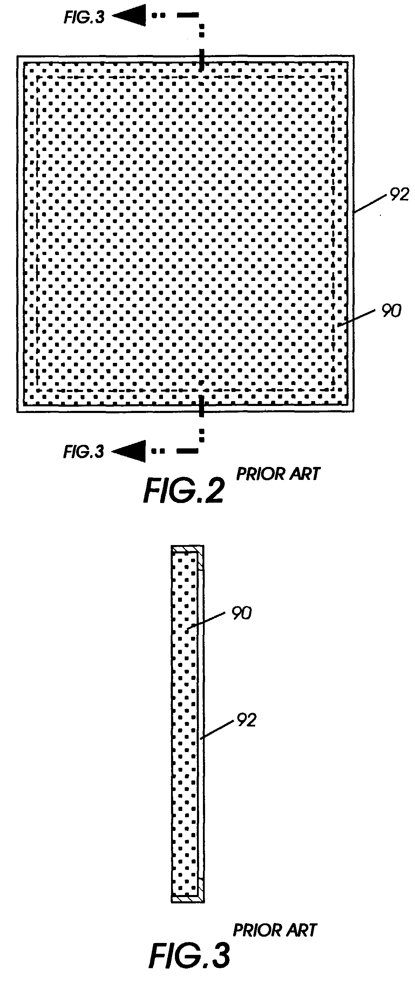

Turning next to Figs 2 and 3, there is illustrated a diagram of a currently constructed filter assembly in which the filter material 90 is inserted into a cardboard or plastic framework 92. This framework provides rigidity for the assembly to be placed into a machine ducting, however the filter framework usually costs more than the functional filter medium itself.

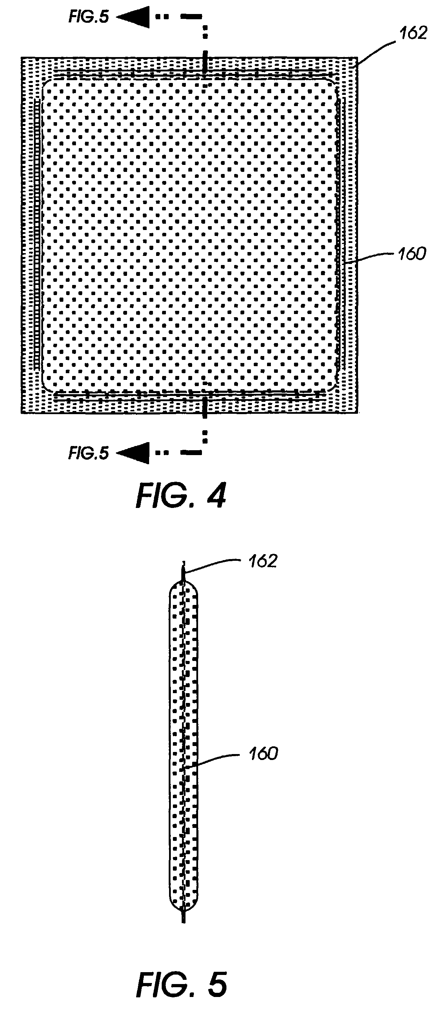

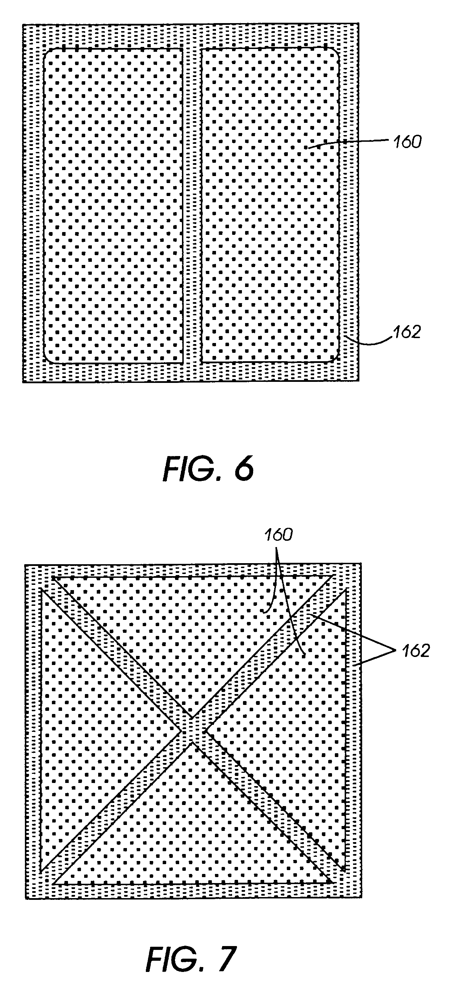

Turning next to Figs 4 and 5, there is illustrated a filter constructed according to the present invention. In Fig. 4, the section of filter material 160 is shown in which the peripheral edges 162 have been compressed into a substantially rigid spine. This is illustrated also in cross-section Fig. 5. This compression of the filter material adds sufficient rigidity to the filter section so that it can be placed into the machine ducting without the need for an external framework. Should additional rigidity be required, the filter material can be compressed as illustrated in Figs 6 and 7 to add further rigidity to the filter material. Thus, the filter can be constructed and manufactured utilizing only a single piece of material with an integrally molded spine to support the filter in the machine duct work. The filter material can also be heated as it is compressed to provide for a weld type arrangement which would further add rigidity to the filter material.

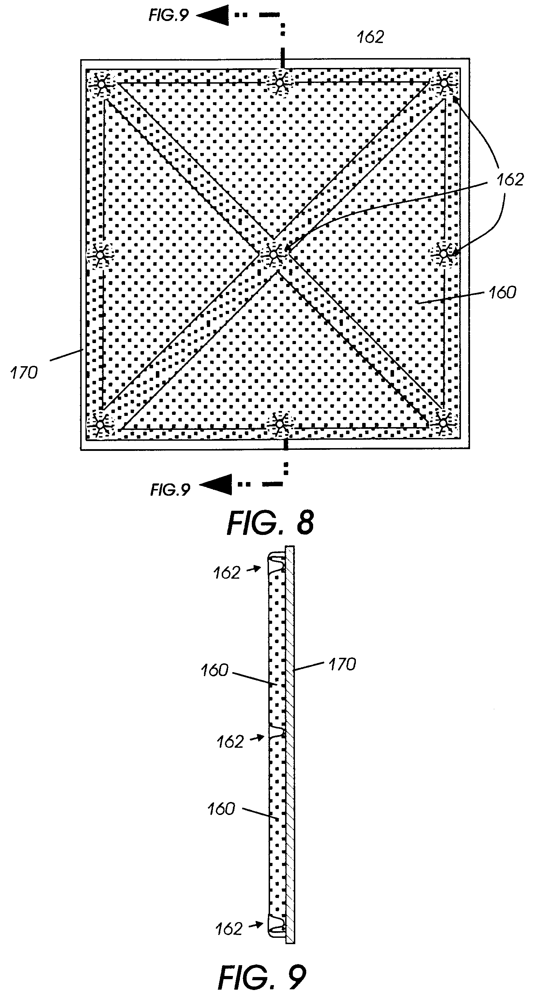

Turning next to Figs 8 and 9, a second method of manufacture is illustrated, in which the filter material may be attached to a separate piece of rigid framework by hot melting or hot welding the filter material to the frame. this method would involve utilizing a large piece of filter material and a number of frame pieces and the filter material could be hot welded to the frame piece in one operation and then cut up into individual filters. This method would greatly increase the efficiency of the manufacture and would not be as time consuming as inserting individual filter sections into separate frames.

In recapitulation, there is provided a filter mechanism for an electrophotographic copying machine. The filter mechanism is constructed of a piece of filter medium in which the peripheral edge is heated and compressed to form a rigid spine. Further spines could be created by compressing diagonal or other shape sections across the filter medium to provide added rigidity. The filter is then structurally stable enough to then be inserted into machine duct work without the necessity for an additional cardboard or injection molded frame as is currently utilized. A second embodiment of manufacture would entail hot welding a large piece of filter medium to individual frame sections and then cutting the individual filters after attachment of the filter medium to the frame.

The filter mechanism could also incorporate the ozone removing materials in combination with the dirt particle removing materials. A composite or sandwich-type of filter material comprised of both a dirt removing matter and an ozone depleting matter such as a Hopcalite impregnated foam could be formed into the integral filter/frame structure as illustrated.

## Claims

1. An air filter for an electrical apparatus, comprising:
a frame; and
a supply of filter material wherein said frame is integrally formed from said filter material to form a unitary member.

2. The filter of claim 1, wherein said filter material comprises an ozone absorbing material.

3. The filter of claim 1 or 2, further comprising a notification device cooperating with said filter material to alert a user when said filter material is depleted.

4. The filter of claim 3, wherein said notification device comprises a device, integral to the filter material for generating an audio signal.

5. The filter of claim 3 or 4, wherein said notification device comprises a detector located adjacent said filter, for generating a signal indicative of an increase in pressure of air flowing through said filter.

6. A method of making a filter for an electrical apparatus, comprising forming a framework integral to a filter by compressing a portion of filter material into a rigid structural member.

7. The method of claim 6, further comprising heating the compressed portion of the filter material to aid in rigidizing the filter material.

8. A method of making a filter for an electrical apparatus, comprising attaching a quantity of filter media sufficient to form a plurality of filters to a plurality of frame members and separating the individual filters from each other after attachment.
